(19)

**Europäisches Patentamt**
**European Patent Office**
**Office européen des brevets**

(11) **EP 4 764 398 A1**

(12) **EUROPEAN PATENT APPLICATION**

(43) Date of publication:
24.06.2026 Bulletin 2026/26

(21) Application number: 24221768.5

(22) Date of filing: 19.12.2024

(51) International Patent Classification (IPC):
**G01B 9/02055** (2022.01)  **G01B 9/02** (2022.01)
**G01B 9/0209** (2022.01)  **G01B 11/06** (2006.01)

(52) Cooperative Patent Classification (CPC):
**G01B 9/02078; G01B 9/02087; G01B 9/0209;**
**G01B 11/0675;** G01B 2290/35

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Mitutoyo Corporation**
**Kawasaki, Kanagawa 213-8533 (JP)**

(72) Inventors:
• **KUMAR, Nitish**
**5508 MP VELDHOVEN (NL)**
• **KUMAR, Neeraj**
**5658 EN EINDHOVEN (NL)**

(74) Representative: **EP&C**
**P.O. Box 3241**
**2280 GE Rijswijk (NL)**

(54) **METHOD FOR DETERMINING A HEIGHT MAP AND INTERFEROMETRIC SYSTEM FOR THE SAME**

(57) The invention relates to a method for determining a height map of a sample surface comprising an edge. The invention further relates to an interferometric system for determining a height map of a sample surface comprising an edge. The invention further relates to a computer readable data carrier comprising a computer program that, when run on a processor of an interferometric system according to the invention, causes the interferometric system to perform the method according to the invention.

Fig. 1

Processed by Luminess, 75001 PARIS (FR)

## Description

The invention relates to a method for determining a height map of a sample surface comprising an edge. The invention further relates to an interferometric system for determining a height map of a sample surface comprising an edge. The invention further relates to a computer readable data carrier comprising a computer program that, when run on a processor of an interferometric system according to the invention, causes the interferometric system to perform the method according to the invention.

It is known in the art to determine a height map of a sample surface by relating a phase of a reflected light to a height through a wavelength of the light used. For example, a phase map of a sample surface may be obtained using an interferometric system, for example a white light interferometric system, wherein the phases are determined by allowing light reflected on the sample surface to interfere with a reference light beam. An example of a method of white light interferometry for determining a height map may be found in EP2314982 B1, wherein a zero phase crossing method is used. Such a method may have an accuracy in the order of 1nm on a continuous surface, i.e. a surface without edges.

Phase maps generally are less accurate when an edge is present on the sample surface which has an edge height that exceeds the wavelength of the light used to determine the phase map. The method of determining the phase map may not be able to distinguish between an edge having an edge height, for example, of one wavelength or of two wavelengths because the phase map is invariant under shifts of multiples of $2\pi$. This reduces the accuracy of a height map based on the phase map.

A known solution to increase the accuracy of a height map of a sample surface with an edge, which height map is obtained by a phase-based method comprises the following steps. The location of the edge may be determined by an inspection of the sample surface. Subsequently, the surface may be divided into two areas separated by the edge. An average height of the first area may then be subtracted from an average height of the second area to obtain an improved estimate for the edge height and correct the original height map.

However, with increasing requirements in measurement precision, in particular in the measuring of height maps, e.g. in quality control processes, a need arises to further increase the accuracy of determining the edge height. An increased accuracy in determining the edge height may be related to an increase accuracy in determining the height map of the sample surface.

The invention aims to provide a method for increasing the accuracy of a height map of a sample surface having an edge.

The aim of the invention is achieved by the method for determining a height map of a sample surface comprising an edge according to claim 1.

The method comprises obtaining a phase map of the sample surface by determining a phase of a light reflected on the sample surface, wherein the light has an associated wavelength. The phase map may be obtained using an interferogram, i.e. wherein a phase is determined by comparing the light reflected on the sample surface to a reference light. The associated wavelength of the light may be the central wavelength of the light used by the interferometer, for example the central wavelength of the light used by a white light interferometer.

The phase map comprises phase information for each location on the sample surface. For example, a phase may be determined for each pixel of an optical sensor used to determine the phase map. As such each pixel may correspond to a location on the sample surface. In other embodiments, the resolution of the phase map may be greater than or smaller than the resolution of the sensor used.

The method further comprises obtaining a pre-height map of the sample surface. The pre-height map may be obtained based on the phase-map, e.g. using known methods such as disclosed in EP2314982 B1. However, the invention is not limited to this possibility. The pre-height map may be obtained using different means. The pre-heights of the pre-height map may also be corrected using the method described above, wherein locations separated by an edge are grouped, an average height is determined for the group, and the height of the group is corrected based on the average height, before the pre-height map is used in the method of the invention.

The pre-height map may allow to identify edges present on the sample surface. In embodiments, the edges may have to be identified independently from the pre-height map, e.g. based on a different measurement.

The method comprises identifying a first area of the sample surface and a second area of the sample surface. The first area and the second area of the sample surface are separated by the edge. For example. The edge may divide the sample surface into two disjoined areas, for example because the edge forms a closed loop. These areas may be identified as the first area and the second area. However, it is not required that the first area and the second area fully cover the sample surface. For example, the edge may run from an side of the sample surface to a center of the sample surface. This allows for a smooth path from one side of the edge to another side of the edge. Also in this case, the first area and the second area may be identified on the sample surface on opposing sides of the edge.

The method comprises choosing a first location adjacent to the edge in the first area and a second location adjacent to the edge in the second area, wherein the first location is opposite the second location. In other words, the first location and the second location are separated by the edge, i.e. a height difference between the first location and the second location may be entirely due to the presence of the edge. The first location and second location may correspond to pixels of an optical sensor used to determine the height map, e.g. the phase map.

The method comprises determining a pre-height difference between the first location and the second location based on the pre-height map. The pre-height difference, e.g. $\Delta H_h$, may be determined by taking the height associated with the first location from the pre-height map and subtracting the height associated with the second location from the pre-height map. The so-obtained pre-height difference may be said to be an uncorrected height difference because the pre-height difference is not yet corrected according to the invention.

The method comprises calculating a phase height difference between the first location and the second location based on the phase map and the associated wave length. The phase height difference is a measure of the phase difference between the first location and the second location determined based on the phase difference between the two locations and scaling with the associated wavelength. However, the phase height difference is determined as a measure of distance. For example, the phase height difference, $\Delta H_\varphi$, may be determined based on

$$\Delta H_\varphi = \Delta\varphi \; \frac{\lambda}{4\pi}$$

wherein $\Delta\varphi$ is a phase difference between the first location and the second location, e.g. in radians, and $\lambda$ is the associated wavelength.

The method further comprises determining a zero phase edge height of the edge by calculating a difference between the determined pre-height difference and the determined phase height difference. For example, the zero phase edge height, $\Delta H$, may be determined by:

$$\Delta H = \Delta H_h - \Delta H_\varphi$$

wherein $\Delta H_h$ is the pre-height difference between the first location and the second location determined based on the pre-height map and $\Delta H_\varphi$ is the phase height difference. Preferably, the phase height difference and the pre-height difference are determined with the same units so that an additional conversion is not needed.

The invention relies on the insight that the zero phase edge height should be equal to an integer multiple of half the associated wavelength because the net phase difference has been subtracted from the determined pre-height difference. In order words, the zero phase edge height should be 0 mod($\lambda/2$). A deviation of the zero phase edge height from the multiple of half the associated wavelength indicates an inaccuracy in the pre-height difference and thus in the height of the first location and the second location.

In order to exploit this insight, the method further comprises determining a height correction by determining a difference between the zero phase edge height and an integer multiple of half the associated wavelength. Preferably, the closest integer multiple of half the associated wavelength is used to determine the difference.

The pre-height map is then corrected with the height correction by correcting the relative heights in the first area and the second area in the pre-height map based on the height correction. For example, the height in the first area is corrected with the height correction. In another example, the height in the second area and in the first area are both corrected with half the height correction. In embodiments, multiple height corrections for multiple locations along the edge may be determined according to the invention. The final correction of the pre-height map may then be based on the multiple height corrections. This may improve accuracy, for example in a case where the edge height is not constant.

The invention allows to improve an accuracy of the height map even if the edge height of the edge is greater than the associated wavelength.

In embodiments, the phase map is a wrapped phase map. The wrapped phase map has phase values that are constrained to lie in its principle value interval, e.g. a chosen interval of length $2\pi$. A phase value that is outside the principle value interval may be shifted by multiples of $2\pi$ until the phase value lies in the principle value interval.

In embodiments, use is made of an interferometric system, e.g. wherein the interferometric system is a white light interferometric system, in the method and wherein the pre-height map is obtained using the interferometric system and wherein the phase map is obtained using the interferometric system. For example, the pre-height map may be determined based on a known method, e.g. a method such as disclosed in EP2314982 B1.

In embodiments, the identifying the first area and the second area comprises:

- obtaining an intensity map of the sample surface based on an intensity of light reflected on the sample surface;
- optionally removing a background from the intensity map;
- identifying the edge based on an intensity of pixels of the intensity map being different from an intensity of surrounding pixels, e.g. based on an intensity of the pixels being below a predetermined threshold; and
- identifying the first area and the second area on either side of the edge.

Generally, the edge of the samples surface reflects light in a different direction compared to the surrounding area of the sample surface, e.g. due to a local tilt angle of the edge being different compared to the surrounding area. Thus, the location of the edge may be determined based on an intensity map of the sample surface.

In embodiments, the pre-height map is obtained based on the phase map and the associated wave length.

In embodiments, the step of obtaining the phase map comprises:

- obtaining a stack of interferograms by vertical scanning of the sample surface through a focal plane of an interferometric system having an optical sensor, wherein each interferogram comprises a measured light intensity for each pixel of the interferometric system at a respective height of the sample surface relative to the focal plane;
- determining a covariance matrix for the stack of interferograms;
- determining principal components of the stack of interferograms by performing a singular value decomposition of the covariance matrix;
- selecting a first principal component associated with a biggest eigenvalue of the covariance matrix and a second principal component associated with a second biggest eigenvalue of the covariance matrix;
- determining a measured phase, for each pixel of the pixels, based on, e.g. by taking an arctangent of, a ratio of vector components of the first and second principal components, wherein the respective vector components are associated with the respective pixel; and
- determining the phase map based on the measured phase for each pixel.

In these embodiments, each interferogram of the stack is associated with a height of the sample surface relative to the optical sensor and/or the optical plane. To obtain the stack, the sample surface is moved vertically, e.g. by vertical scanning, wherein the vertical direction is understood to be a direction parallel to the measurement light beam at the sample surface. The sample surface may be moved between different measurement positions and at each measurement position an interferogram is determined. The interferogram may be represented by an $M{\times}N$ matrix, e.g. when the optical sensor has $M{\times}N$ pixels, wherein each entry of the $M{\times}N$ matrix comprises an intensity of the associated pixel. The intensity contains information related to the relative phase of the measured light at that pixel for the associated interferogram. Thus by obtaining a stack of Z interferograms, a total of Z $M{\times}N$ matrices may be obtained. For example, the Z $M{\times}N$ matrices may be represented by a single three-dimensional $M{\times}N{\times}Z$ matrix. The three-dimensional $M{\times}N{\times}Z$ matrix representing the stack of interferograms may be reshaped to a two-dimensional $M*N{\times}Z$ matrix $A_{M*N\,\times\,Z}$, wherein each column is associated to an interferogram of the stack of interferograms. It may be shown that the two-dimensional $M*N{\times}Z$ matrix $A_{M*N\,\times\,Z}$ may be written as a sum:

$$A_{M*N\,x\,Z} = a_Z u_{M*N} + b_Z v_{M*N}$$

wherein $u_{M*N} = B\cos(\varphi_{M*N})$ and $v_{M*N} = B\sin(\varphi_{M*N})$, where $\varphi_{M*N}$ is the measured phase which is be related to the height of the surface at a pixel, B is the modulation amplitude and $a_Z$ and $b_Z$ depend on the random phases shifts and not on $\varphi_{M*N}$.

It may be shown that the two signals $u_{M*N}$ and $v_{M*N}$ are approximately uncorrelated such that $A_{M*N\,\times\,Z}$ may be decomposed into $u_{M*N}$ and $v_{M*N}$, thus removing the dependency on the random phase shifts associated to random vibrations of the sample relative to the interferometer.

The signals $u_{M*N}$ and $v_{M*N}$ may be obtained by performing a principal component analysis on the stack of interferograms, e.g. on the matrix representing the stack of interferograms $A_{M*N\,\times\,Z}$. To this end, the method further comprises determining a covariance matrix for the stack of interferograms. A covariance matrix may be a square and symmetric matrix which may be obtained by multiplying a matrix with its own transpose. The reshaped two-dimensional matrix $A_{M*N\,\times\,Z}$ may be multiplied with its transpose such that a M*NxM*N covariance matrix of the stack of interferograms is obtained.

In order to determine the principal components of the stack of interferograms, a singular value decomposition may be performed on the associated covariance matrix. The singular value decomposition allows to decompose the square matrix into an orthogonal matrix and a diagonal matrix. The principal components of the covariance matrix may then be obtained by calculating a projection of the matrix $A_{M*N\,\times\,Z}$ on the orthogonal matrix of the singular value decomposition, e.g.

$$Y = \Phi\,A_{M*N\,x\,Z}.$$

Here Y comprises the principal components of $A_{M*N\,\times\,Z}$, i.e. of the stack of interferograms, and $\Phi$ is the orthogonal matrix of the singular value decomposition.

It may be shown that the principal component associated with the largest eigenvalue and the principal component associated with the second largest eigenvalue correspond to the signals $u_{M*N}$ and $v_{M*N}$ (which are vectors with each entry thereof associated with a pixel of the optical sensor and which are proportional to the sine and cosine of the measured phase). Thus, by taking ratios of the components of $u_{M*N}$ and $v_{M*N}$, ratios of sines and cosines may be obtained. As a result, for example taking a tangent of such a ratio may result in obtaining of the measured phase at a respective pixel may.

This embodiment therefore comprises, selecting a first principal component associated with a biggest eigenvalue of the covariance matrix and a second principal component associated with a second biggest eigenvalue of the covariance matrix and taking the ratio of ratio of vector components of the first and second principal components. The measured phase may be determined based on this ratio. The height map is obtained based on the measured phase for each pixel, e.g. based on an average wavelength of the broad band light source.

Using this embodiment, it may be shown that the obtained measured phases for the pixels may have an undetermined global sign. This global sign is a result of the singular value decomposition of the covariance matrix and the use of the orthogonal matrix $\Phi$ in determining the principal components. As may be appreciated, the orthogonal matrix $\Phi$ appears twice in the singular value decomposition of the covariance matrix and is thus not uniquely determined due to a possible global sign change thereof. As a result, the determined principal components are also not unique determined up to a sign, which results in the unknown global sign of the measured phase. The correct global sign may be determined by looking at phases of the first and second principal components. The first and second principal components viewed as vectors, always have a phase difference of $\pm\pi/2$ with the correct global sign for the height map when the first principal component lagging behind the second principal component by $\pi/2$. If this is not the case, the global sign has to be reversed, relative to the sign used when determining the Hilbert transformed eigenvectors, to obtain the correct height map.

In order to determine if the global sign of the measured phase is correct this embodiment may further comprise performing a Hilbert transform on an eigenvector of the covariance matrix that is associated with the biggest eigenvalue thereof, obtaining a complex Hilbert transformed eigenvector. The real part of the Hilbert transformed eigenvector lags behind the imaginary part of the Hilbert transported eigenvector precisely by a factor $\pi/2$.

Thus, by determining a reference phase for a reference pixel of the pixels based on, e.g. by taking by taking an arctangent of, a ratio of vector components of the real part and imaginary part of the Hilbert transformed eigenvector, wherein the respective vector components are associated with the reference pixel and determining if the measured phase of the reference pixel corresponds to the reference phase of the reference pixel, it may be checked if the global sign of the measured phase is correct by checking if the measured phase of the reference pixel corresponds to the reference phase and reversing the global sign of the height map, e.g. of the measured phases, if the measured phase does not correspond to the reference phase. Thus, this allows to determine a height map of the sample surface with a correct global sign.

The correct global sign may also be determined by:

- taking a Fourier transform of a first eigenvector of the covariance matrix which is associated with the biggest eigenvalue and taking a Fourier transform of a second eigenvector of the covariance matrix which is associated with the second biggest eigenvalue;
- determining a highest magnitude frequency of the Fourier transformed first eigenvector;
- calculating a first Fourier phase of the Fourier transformed first eigenvector and a second Fourier phase of the Fourier transformed second eigenvector associated with the determined highest magnitude frequency;
- determining a difference between the first Fourier phase and the second Fourier phase by subtracting the second Fourier phase from the first Fourier phase; and
- if the difference between the First Fourier phase and the second Fourier phase is between 0 and $\pi$ modulo $2\pi$, reversing a global sign of the determined height map.

Thus, accordingly the phase difference between the first and second principal components is checked by looking at a phase difference of the associated Fourier transformed vectors. The global sign of the height map is revered, relative to the sign used to check the difference between the Fourier phases, if the difference therebetween is between 0 and $\pi$ modulo $2\pi$.

The invention further relates to an interferometric system for determining a height map of a sample surface comprising an edge, wherein the interferometric system comprises a light source, an optical sensor and a processor, wherein the processor is configured for:

- obtaining a phase map of the sample surface based on a measurement of the optical sensor of light having an associated wavelength reflected on the sample surface;
- obtaining a pre-height map of the sample surface based on a measurement of the optical sensor of light reflected on the sample surface;
- identifying a first area of the sample surface and a second area of the sample surface, wherein the first area and the second area are separated by the edge;
- choosing a first location adjacent to the edge in the first area and a second location adjacent to the edge in the second area, wherein the first location is opposite the second location;
- determining a pre-height difference between the first location and the second location based on the pre-height map, and calculating a phase height difference between the first location and the second location based on the phase map and the associated wavelength;
- determining a zero phase edge height of the edge by calculating the difference between the pre-height difference and the phase height difference;
- determining a height correction by determining a difference between the zero phase edge height and an integer multiple of half the associated wavelength; and
- determining the height map by correcting the heights in the first area and the second area in the pre-height map with the height correction.

In embodiments, the processor is configured for determining the phase height difference, $\Delta H_\varphi$, by using:

$$\Delta H_\varphi = \Delta\varphi \, \frac{\lambda}{4\pi}$$

wherein $\Delta\varphi$ is a phase difference between the first location and the second location and $\lambda$ is the associated wavelength.

In embodiments, the phase map is a wrapped phase map.

In embodiments, the interferometric system is a white light interferometric system comprising a broad band light source, and wherein the pre-height map is obtained using white light interferometry.

In embodiments, the processor is configured for identifying the first area and the second area by:

- obtaining an intensity map of the sample surface based on an intensity of light reflected on the sample surface;
- optionally removing a background from the intensity map;
- identifying the edge based on an intensity of pixels of the intensity map being below a predetermined threshold; and
- identifying the first area and the second area on either side of the edge.

In embodiments, the processor is configured for determining the pre-height map based on the phase map and the associated wavelength.

In embodiments, the processor is configured for obtaining the phase map by:

- obtaining a stack of interferograms by causing the optical sensor to vertically scan the sample surface through a focal plane of the optical sensor, e.g. by moving the optical sensor relative to the sample surface, wherein each interferogram comprises a measured light intensity for each pixel of the interferometric system at a respective height of the sample surface relative to the focal plane;
- determining a covariance matrix for the stack of interferograms;
- determining principal components of the stack of interferograms by performing a singular value decomposition of the covariance matrix;
- selecting a first principal component associated with a biggest eigenvalue of the covariance matrix and a second principal component associated with a second biggest eigenvalue of the covariance matrix;
- determining a measured phase, for each pixel of the pixels, based on, e.g. by taking an arctangent of, a ratio of vector components of the first and second principal components, wherein the respective vector components are associated with the respective pixel; and

- determining the phase map based on the measured phase for each pixel.

The invention further relates to a computer readable data carrier comprising a computer program that, when run on a processor of an interferometric system according to the invention, causes the interferometric system to perform the method according to the invention.

Embodiments of the invention will now be described, by way of example, with reference to the accompanying drawing in which corresponding reference symbols indicate corresponding parts, and in which:

- Fig. 1 depicts a white light interferometer for determining a height map;
- Fig. 2 depicts a flow chart of a method for determining a height map of a sample surface; and
- Fig. 3 depicts a sample surface with an edge.

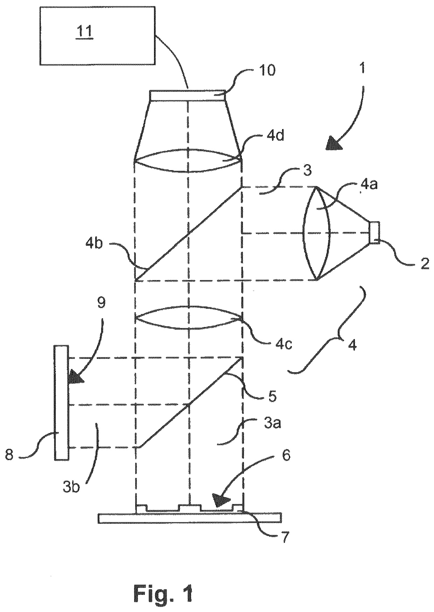

Figure 1 depicts an example of a white light interferometer 1 for determining a pre-height map and/or a phase map. The interferometer comprises a broadband light source 2. Light 3 from the light source 2 may pass through a lens 4a, a beamsplitter 4b, and a second lens 4c. After passing through the second lens 4c, the light 3 is split by a beamsplitter 5 into a first partial light beam 4a and a second partial light beam 3b. The first partial light beam 3a is directed to a sample surface 6 of a sample 7. The second partial light beam 3b is directed to a reference mirror 8 with a reference surface 9. After reflection by the mirrors 6 an d8, the partial light beams 3a, 3b are combined and propagate to the optical sensor 10 with multiple pixels. For example, the optical sensor 10 may be an CCD array camera 10. This setup results in an interference signal on the optical sensor 10.

The pixels of the optical sensor 10 may correspond to a location on the sample surface 6 and on the reference surface 9. After vertical scanning, each pixel may have an associated intensity signal which maybe associated to a height at a corresponding spatial position of the sample 7, e.g. via the phase.

The sample 7 may be moved through an focal plane of the second lens 4c and for multiple positions of the sample 7 relative to the interferometer 1 an interferogram is captured by the optical sensor 10. In this way, a stack of interferograms may be obtained 101 by the interferometer 1, which stack of interferograms may be received by the processor 11 to allow the processor to determine the height map based on the method of the invention.

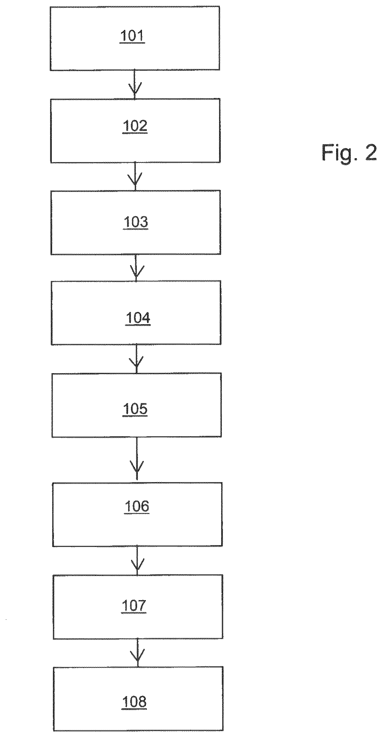

Figure 2 depicts a flow chart of a method for determining a height map of a sample surface 6. The method comprises obtaining 101 a phase map of the sample surface 6 by determining a phase of a light reflected on the sample surface 6 having an associated wavelength. For examples, the phase map may be obtained using the white light interferometer 1 of figure 1.

The same white light interferometer, or a different device, may be used in obtaining 102 a pre-height map of the sample surface 6. The pre-height map gives a first approximation of the height of the sample surface 6. The method aims to improve the accuracy of the pre-height map.

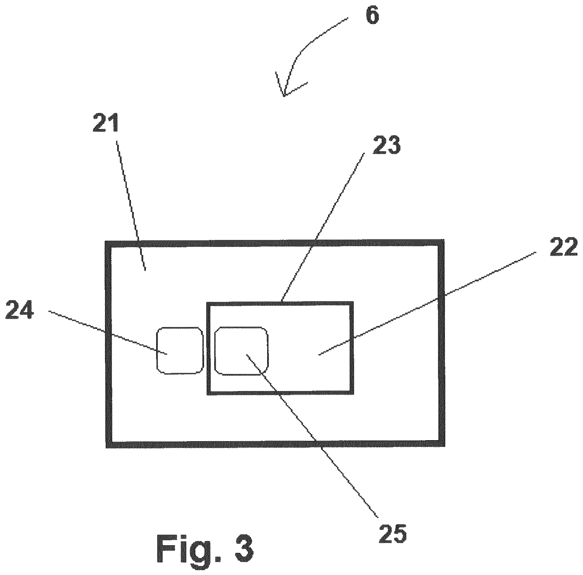

The method further comprises identifying 103 a first area 21 of the sample surface 6 and a second area 22 of the sample surface 6, wherein the first area 21 and the second area 22 are separated by the edge 23. The edge 23 may, as shown in figure 3, divide the sample surface 6 into two disjointed areas.

The method further comprises choosing 104 a first location 24 adjacent to the edge 23 in the first area 22 and a second location 25 adjacent to the edge 23 in the second area 22, wherein the first location 24 is opposite the second location 25. As shown in figure 3, the first location 24 and the second location 25 are separated by the edge 23. The edge 23 is between the otherwise adjacent first area 24 and second area 25. The first location 24 and the second location 25 shown in figure 3 may be bigger than a pixel size of the white light interferometer 1. In different embodiments, the size of the first location 24 and the second location 25 may differ.

The next step is determining 105 a pre-height difference between the first location 24 and the second location 25 based on the pre-height map, and calculating a phase height difference between the first location 24 and the second location 25 based on the phase map and the associated wavelength.

The method comprises determining 106 a zero phase edge height of the edge by calculating the difference between the pre-height difference and the phase height difference. The zero phase edge height

After determining 106 the zero phase edge height, the method comprises determining 107 a height correction by determining a difference between the zero phase edge height and an integer multiple of half the associated wavelength.

Then, the height map is determined 108 by correcting the heights in the first area 21 and the second area 22 in the pre-height map with the height correction.

**Claims**

1. Method for determining a height map of a sample surface comprising an edge wherein the method comprises:

 - obtaining a phase map of the sample surface by determining a phase of a light reflected on the sample surface having an associated wavelength;
 - obtaining a pre-height map of the sample surface;
 - identifying a first area of the sample surface and a second area of the sample surface, wherein the first area and the second area are separated by the edge;
 - choosing a first location adjacent to the edge in the first area and a second location adjacent to the edge in the second area, wherein the first location is opposite the second location;
 - determining a pre-height difference between the first location and the second location based on the pre-height map, and calculating a phase height difference between the first location and the second location based on the phase map and the associated wavelength;
 - determining a zero phase edge height of the edge by calculating the difference between the pre-height difference and the phase height difference;
 - determining a height correction by determining a difference between the zero phase edge height and an integer multiple of half the associated wavelength; and
 - determining the height map by correcting the relative heights in the first area and the second area in the pre-height map with the height correction.

2. Method according to claim 1, wherein the phase height difference, $\Delta H_\varphi$, is determined by:

$$\Delta H_\varphi = \Delta\varphi \frac{\lambda}{4\pi}$$

wherein $\Delta\varphi$ is a phase difference between the first location and the second location and $\lambda$ is the associated wavelength.

3. Method according to one or more of the preceding claims, wherein the phase map is a wrapped phase map.

4. Method according to one or more of the preceding claims, wherein use is made of an interferometric system, e.g. wherein the interferometric system is a white light interferometric system, and wherein the pre-height map is obtained using the interferometric system and wherein the phase map is obtained using the interferometric system.

5. Method according to one or more of the preceding claims, wherein the identifying the first area and the second area comprises:

 - obtaining an intensity map of the sample surface based on an intensity of light reflected on the sample surface;
 - optionally removing a background from the intensity map;
 - identifying the edge based on an intensity of pixels of the intensity map being different from an intensity of surrounding pixels, e.g. based on an intensity of the pixels being below a predetermined threshold; and
- identifying the first area and the second area on either side of the edge.

6. Method according to one or more of the preceding claims, wherein the pre-height map is obtained based on the phase map and the associated wave length.

7. Method according to one or more of the preceding claims, wherein the step of obtaining the phase map comprises:

- obtaining a stack of interferograms by vertical scanning of the sample surface through a focal plane of an interferometric system, wherein each interferogram comprises a measured light intensity for each pixel of the interferometric system at a respective height of the sample surface relative to the focal plane;
- determining a covariance matrix for the stack of interferograms;
- determining principal components of the stack of interferograms by performing a singular value decomposition of the covariance matrix;
- selecting a first principal component associated with a biggest eigenvalue of the covariance matrix and a second principal component associated with a second biggest eigenvalue of the covariance matrix;
- determining a measured phase, for each pixel of the pixels, based on, e.g. by taking an arctangent of, a ratio of vector components of the first and second principal components, wherein the respective vector components are associated with the respective pixel; and
- determining the phase map based on the measured phase for each pixel.

8. Interferometric system for determining a height map of a sample surface comprising an edge, wherein the interferometric system comprises a light source, an optical sensor and a processor, wherein the processor is configured for:

- obtaining a phase map of the sample surface based on a measurement of the optical sensor of light having an associated wavelength reflected on the sample surface;
- obtaining a pre-height map of the sample surface based on a measurement of the optical sensor of light reflected on the sample surface;
- identifying a first area of the sample surface and a second area of the sample surface, wherein the first area and the second area are separated by the edge;
- choosing a first location adjacent to the edge in the first area and a second location adjacent to the edge in the second area, wherein the first location is opposite the second location;
- determining a pre-height difference between the first location and the second location based on the pre-height map, and calculating a phase height difference between the first location and the second location based on the phase map and the associated wavelength;
- determining a zero phase edge height of the edge by calculating the difference between the pre-height difference and the phase height difference;
- determining a height correction by determining a difference between the zero phase edge height and an integer multiple of half the associated wavelength; and
- determining the height map by correcting the heights in the first area and the second area in the pre-height map with the height correction.

9. Interferometric system according to claim 8, wherein the processor is configured for determining the phase height difference, $\Delta H_\varphi$, by using:

$$\Delta H_\varphi = \Delta\varphi \, \frac{\lambda}{4\pi}$$

wherein $\Delta\varphi$ is a phase difference between the first location and the second location and $\lambda$ is the associated wavelength.

10. Interferometric system according to one or more of the claims 8 - 9, wherein the phase map is a wrapped phase map.

11. Interferometric system according to one or more of the claims 8 - 10, wherein the interferometric system is a white light interferometric system comprising a broad band light source, and wherein the pre-height map is obtained using white light interferometry.

12. Interferometric system according to one or more of the claims 8 - 11, wherein the processor is configured for identifying the first area and the second area by:

- obtaining an intensity map of the sample surface based on an intensity of light reflected on the sample surface;
- optionally removing a background from the intensity map;
- identifying the edge based on an intensity of pixels of the intensity map being below a predetermined threshold; and
- identifying the first area and the second area on either side of the edge.

13. Interferometric system according to one or more of the claims 8 - 12, wherein the processor is configured for determining the pre-height map based on the phase map and the associated wavelength.

14. Interferometric system according to one or more of the claims 8 - 13, wherein the processor is configured for obtaining the phase map by:

- obtaining a stack of interferograms by causing the optical sensor to vertically scan the sample surface through a focal plane of the optical sensor, e.g. by moving the optical sensor relative to the sample surface, wherein each interferogram comprises a measured light intensity for each pixel of the interferometric system at a respective height of the sample surface relative to the focal plane;
- determining a covariance matrix for the stack of interferograms;
- determining principal components of the stack of interferograms by performing a singular value decomposition of the covariance matrix;
- selecting a first principal component associated with a biggest eigenvalue of the covariance matrix and a second principal component associated with a second biggest eigenvalue of the covariance matrix;
- determining a measured phase, for each pixel of the pixels, based on, e.g. by taking an arctangent of, a ratio of vector components of the first and second principal components, wherein the respective vector components are associated with the respective pixel; and
- determining the phase map based on the measured phase for each pixel.

15. Computer readable data carrier comprising a computer program that, when run on a processor of an interferometric system according to one or more of the claims 8 - 14, causes the interferometric system to perform the method according to one or more of the claims 1 - 7.

Fig. 1

Fig. 2

Fig. 3

Europäisches
Patentamt
European
Patent Office
Office européen
des brevets

**EUROPEAN SEARCH REPORT**

Application Number

EP 24 22 1768

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/149781 A1 (HARASAKI AKIKO [JP] ET AL) 17 October 2002 (2002-10-17) | 1-6, 8-13,15 | INV. G01B9/02055 |
| A | * the whole document * | 7,14 | G01B9/02 G01B9/0209 |
| | ----- | | G01B11/06 |
| A | US 5 471 303 A (AI CHIAYU [US] ET AL) 28 November 1995 (1995-11-28) * the whole document * | 1-15 | |
| | ----- | | |
| A | US 5 398 113 A (DE GROOT PETER [US]) 14 March 1995 (1995-03-14) * the whole document * | 1-15 | |
| | ----- | | |

TECHNICAL FIELDS
SEARCHED      (IPC)

G01B

The present search report has been drawn up for all claims

| Place of search | Date of completion of the search | Examiner |
|---|---|---|
| Munich | 6 June 2025 | Gomez, Adriana |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 1768

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2025

| Patent document cited in search report | Publication date | Patent family member(s) | | Publication date |
|---|---|---|---|---|
| US 2002149781 A1 | 17-10-2002 | NONE | | |
| US 5471303 A | 28-11-1995 | NONE | | |
| US 5398113 A | 14-03-1995 | DE | 69426070 T2 | 13-06-2001 |
| | | EP | 0682771 A1 | 22-11-1995 |
| | | JP | 2679876 B2 | 19-11-1997 |
| | | JP | H08502829 A | 26-03-1996 |
| | | US | 5398113 A | 14-03-1995 |
| | | WO | 9418521 A1 | 18-08-1994 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2314982 B1